# EUROPEAN PATENT SPECIFICATION

(11) **EP 4 504 498 B1**
(45) Date of publication and mention of the grant of the patent: **23.09.2026**
(21) Application number: 23715812.6
(22) Date of filing: 28.03.2023
(51) Int. Cl.: B29C 65/82, B29C 65/48, G01N 29/04, F03D 1/06, B29L 31/08, G01N 29/06, B29L 31/00

(54) **ADHESIVE JOINT INSPECTION OF WIND TURBINE BLADES**
INSPEKTION VON KLEBEVERBINDUNGEN AN WINDTURBINENSCHAUFELN
INSPECTION DE JOINT ADHÉSIF DE PALES D'ÉOLIENNE

(30) Priority: 08.04.2022 GB 202205162
(43) Date of publication of application: 12.02.2025
(73) Proprietor: LM Wind Power A/S, 6000 Kolding (DK)
(72) Inventor: NIELSEN, Lars, 6000 Kolding (DK)
(74) Representative: COPA Copenhagen Patents
(86) International application number: PCT/EP2023/057938
(87) International publication number: WO 2023/194150

(56) References cited:
- WO-A1-2020/114564
- WO-A1-2020/125903
- CN-A- 108 152 376
- CN-A- 113 702 512
- ANDRé LAMARRE: "Improved Inspection of Composite Wind Turbine Blades with Accessible Advanced Ultrasonic Phased Array Technology", 17 November 2017 (2017-11-17), XP055671492, Retrieved from the Internet <URL:https://www.ndt.net/events/APCNDT2017/app/content/Paper/227_Lamarre_Rev3.pdf> [retrieved on 20200225]

## Description

### Field of the invention

The present invention relates to a wind turbine blade, to a method of manufacturing a wind turbine blade, to a system for inspecting a wind turbine blade, and to a method of inspecting a glued assembly of a first wind turbine blade component and a second wind turbine blade component.

### Background of the invention

Climate change has created an urgent need for sustainable energy, putting the spotlight on wind power as a cost-effective and clean energy source. Wind turbines typically comprise a tower, generator, gearbox, nacelle, and one or more rotor blades, which capture kinetic energy of wind using known airfoil principles. With increasing energy demand, modern wind turbines can have power ratings of above 10 MW and may have rotor blades that exceed 100 meters in length.

Wind turbine rotor blades are typically made from a fibre-reinforced polymer material, comprising a pressure side shell half and a suction side shell half, also called blade halves. The cross-sectional profile of a typical blade includes an airfoil for creating an air flow leading to a pressure difference between both sides. The resulting lift force generates torque for producing electricity.

The shell halves of rotor blades are usually manufactured using blade moulds. First, a blade gel coat or primer is applied to the mould. Subsequently, fibre reinforcement and/or fabrics are placed into the mould followed by resin infusion. A vacuum is typically used to draw epoxy resin material into a mould. Alternatively, prepreg technology can be used in which a fibre or fabric pre-impregnated with resin forms a homogenous material which can be introduced into the mould. Several other moulding techniques are known for manufacturing wind turbine blades, including compression moulding and resin transfer moulding. The resin is allowed to cure, and one or more shear webs or a box spar is positioned in the shells before the shell halves are joined. The shell halves containing the shear webs are then assembled by bonding them together along respective bond lines between an inner shell surface, such as a spar cap surface, and the shear web(s), and along the trailing and leading edges of the blade. The bond lines are generally formed by applying a suitable bonding paste or adhesive along the designated bonding locations.

High quality bond lines are critical for wind turbine blade performance and service life. Separation of bond lines within the blade may result in damage and/or complete failure of the wind turbine. Thus, precise process control and subsequent bond line inspection is important.

However, precise control of the adhesive bond lines of the respective joints can be challenging due to limited access once the blade halves have been assembled. Thus, it is necessary to inspect such bond lines during and/or after manufacturing the blade. To this end, it is known to use ultrasonic testing, such as ultrasonic testing B-scan techniques, to examine bond lines along the blade length. As used herein, the term B-scan image can refer to a reconstructed 2-D image based on raw data collected for a 2-D slice of sample during imaging. By examining the resulting thickness cross section of the blade at any given location, bond line defects may be observed as deviations from an expected thickness and/or depth of the joint.

Patent document WO 2020/125903 A1 discloses an assembly method for windmill blade comprising the adhesive bonding of several components as skins and structural webs. WO 2020/125903 A1 further discloses the use of ultrasonic NDT to check the adhesive joint. WO 2020/114564 A1 describes ultrasonic inspection of composite wind turbine blades with specific emphasis in the C-Scan technology and phased array technology. CN 113 702 512 A relates to an ultrasonic wave detection method for wind power blades, and further discloses how to inspect a bonding assembly looking for defects.

However, such known inspection techniques are prone to false positive bonding conclusions, which potentially result in defective blades. This is in particular the case where there is a considerable variation or tolerance with respect to acceptable adhesive joint thicknesses. If, for example, the bond line thickness is in a similar mm range as a thickness of a part bonded to the shell, such as a mounting flange of a shear web, then the thickness/depth measurement derived from ultrasonic testing may be inconclusive. It is therefore a first object of the present invention to provide a method of manufacturing and inspecting wind turbine blades, which allows for unambiguous verification of adhesive joint integrity.

It is a further object of the present invention to provide a wind turbine blade which can be more efficiently inspected in terms of adhesive joint integrity.

### Summary of the invention

The present invention addresses one or more of the above-discussed objects by providing a method of manufacturing a wind turbine blade comprising the steps of
providing a first blade component and a second blade component,
attaching at least one ultrasound imaging marker to the second blade component,
bonding the second blade component to the first blade component along at least one adhesive joint,
obtaining an ultrasound image of the adhesive joint and at least part of the bonded first and second blade components, and
identifying the ultrasound imaging marker on the ultrasound image to verify the integrity of the adhesive joint between the first and second blade components.

It was found that this method allows for ultrasonic testing of adhesive joints, in which an improved distinction between ultrasound signals is provided. This is found to reduce or avoid false positive bonding conclusions, and results in an overall improvement in quality control and blade structural stability. In particular where adhesive joints within the wind turbine blade are used to bond blade components having a part thickness which is similar to acceptable thickness tolerances of the adhesive joint, a measurement of depth of backwall echo signal is insufficient in ruling out detachment of said blade component. Therefore, using the ultrasound imaging marker attached to the blade component allows for an unambiguous identification of the blade component on the ultrasound image, and thus for an unambiguous verification of adhesive joint integrity.

The wind turbine blade manufactured according to the method of the present invention will typically have a profiled contour including a pressure side and a suction side, and a leading edge and a trailing edge with a chord having a chord length extending therebetween, wherein the wind turbine blade extends in a spanwise direction between a root end and a tip end. The method will typically comprise moulding a suction side shell half and a pressure side shell half, each of which may be the first blade component, and adhesively joining a suction side shell half and a pressure side shell half along respective bond lines at said leading and trailing edges. It is preferred that the suction side and pressure side shell halves are produced by vacuum assisted resin transfer moulding. Typically, the shell moulding operation includes arranging a fibre lay-up, e.g. comprising glass fibres, including one or more fibre layers on a mould surface to form a shell half structure comprising an aerodynamic outside surface and an opposing inside surface. The fibre lay-up is typically injected or infused with a resin and subsequently cured.

Typically, the blade structure is further reinforced using a number of support members such as shear webs or box beams, which are arranged within the blade and to which the two shell halves may be bonded. Shear webs usually act to reinforce the blade structure, and prevent excessive bending or buckling. Each of the shear webs or box beams may be the second blade component. Usually, the shear webs are placed on spar caps or main laminates which form part of the inside surface of the shell halves. Typically, each shear web will comprise a main body and two opposing mounting flanges for mounting the shear web in between the two shell halves. One mounting flange may be bonded to an open first shell half, whereupon the second opposing mounting flange of the shear web is bonded to the second shell half when bonding the two shell halves together.

In a preferred embodiment, the first blade component is a blade shell part, such as a suction side shell half or a pressure side shell half, and the second blade component is a shear web, wherein preferably a mounting flange of the shear web is bonded to an inner surface of the shell part. Preferably, the shear web is an I-shaped shear web, the shear web having a web body and a first mounting flange at a first end of the web body and a second mounting flange at a second end of the web body. In some embodiments, the shear web has a C-shaped cross-section.

In other embodiments, the first blade component is a suction side shell half, and the second blade component is a pressure side shell half. In some embodiments, the first blade component is a blade shell part, such as a shell half, and the second blade component is a shear web flange. In some embodiments, the first blade component is a blade shell part, such as a shell half, and the second blade component is a receiver box for split blades.

At least one ultrasound imaging marker is attached to the second blade component, such as to a shear web mounting flange. In a preferred embodiment, the step of attaching at least one ultrasound imaging marker to the second blade component comprises adhesively bonding the ultrasound imaging marker to an outer surface of the second blade component. Preferably, the ultrasound imaging marker is attached to a mounting flange surface opposite to a surface for bonding the mounting flange to the shell part, i.e. to a surface that faces away from the mounting region on the shell part. It is preferred that the ultrasound imaging marker is attached to the second blade component, such as to a shear web mounting flange, prior to the step of bonding the second blade component to the first blade component along at least one adhesive joint. However, in other embodiments, the ultrasound imaging marker can be attached to the second blade component, such as to a shear web mounting flange, after the step of bonding the second blade component to the first blade component along at least one adhesive joint.

In another preferred embodiment, the step of attaching at least one ultrasound imaging marker to the second blade component comprises integrating the ultrasound imaging marker into the second blade component. If the second blade component is a shear web with a web body and two opposing mounting flanges, the ultrasound imaging marker may be integrated into the web body, e.g. as a part with an arched or dome-shaped surface extending along the length of the web body. According to a preferred embodiment, the ultrasound imaging marker is a structurally embedded core section of a shear web, the core section comprising a curved, arched or dome-shaped surface, preferably wherein curved, arched or dome-shaped surface faces towards the adhesive joint between the shear web and the shell part.

In some embodiments, the ultrasound imaging marker comprises, or consists of, a foam element. In a preferred embodiment, the foam element has an arched or semi-circular cross section. In some embodiments, the foam element is shaped as a hemisphere, preferably wherein the flat surface of the hemisphere is adhered to the second blade component. The hemisphere preferably has a diameter of 5-25 mm. In other embodiments, the ultrasound imaging marker is box-shaped or has a prismatic shape. In some embodiments, the ultrasound imaging marker may have a rectangular or triangular cross section. In some embodiments, the ultrasound imaging marker may have circular or semi-circular cross section. It is preferred that the ultrasound imaging marker extends along substantially the entire length of the second blade component, e.g. along substantially the entire length, or spanwise extent, of the shear web.

In a preferred embodiment, the ultrasound imaging marker comprises, or consists of, a polymer foam material, such as PET foam, preferably with a density of 40-60 kg/m³. In a preferred embodiment, the ultrasound imaging marker has a diameter or maximum dimension of 5-25 mm. In a preferred embodiment, the ultrasound imaging marker comprises at least one arched, or dome-shaped, surface. In one embodiment, the ultrasound imaging marker comprises a first surface which is substantially flat and a second surface with an arched shape, such as a dome-shaped surface. It is believed that such arched shape, such as a dome-shaped surface, provides a particularly advantageous scattering pattern, which can be used as signature pattern on an ultrasound image for unambiguous identification of the marker.

It is particularly preferred that the ultrasound imaging marker is a comparatively lightweight element, which does not add substantially to the weight of the wind turbine blade. In some embodiments, the weight the ultrasound imaging marker is below 10 kg, preferably below 5 kg, such as below 3 kg. The density of the ultrasound imaging marker is preferably 60 kg/m³ or less, preferably 50 kg/m³ or less.

In a preferred embodiment, the ultrasound imaging marker is capable of attenuating ultrasonic waves. In a preferred embodiment, the ultrasound imaging marker is capable of absorbing ultrasonic waves. In a preferred embodiment, the ultrasound imaging marker is capable of scattering ultrasonic waves.

It is particularly preferred that the first blade component is a blade shell part, wherein the second blade component is a shear web comprising at least one mounting flange for adhesively joining the shear web to a shear web mounting region on an inner surface of a blade shell part, wherein said mounting flange comprises a first surface facing the shear web mounting region and an opposing second surface, wherein the ultrasound imaging marker is attached on the second surface of the mounting flange. For an I-shaped shear web said second surface will typically be subdivided into two opposing parts separated by the web body of the shear web, i.e. typically into a first part which is closer to the trailing edge of the blade, and a second part which is closer to the leading edge of the blade. In some embodiments, respective ultrasound imaging markers are attached on both parts of such subdivided second surface of the mounting flange. In other embodiments, an ultrasound imaging marker is attached only on one of two parts of such subdivided second surface of the mounting flange.

In a preferred embodiment, the second blade component comprises a part with a thickness of 2-30 mm, preferably 2-20 mm, most preferably 2-10 mm, wherein said part is bonded to the adhesive joint. It is particularly preferred that the one or more ultrasound imaging markers are attached to, or incorporated into, said part. In a preferred embodiment, the mounting flange of the shear web has a thickness of 2-10 mm.

The second blade component is bonded to the first blade component along at least one adhesive joint, such as along a glue flange. The adhesive joint may be a leading edge glue joint, a trailing edge glue joint, or most preferably, a blade shell part/shear web glue joint. The adhesive joint may be formed of a suitable glue or bonding paste. In a preferred embodiment, the adhesive joint has a thickness in the range from 1 mm to 25 mm, such as from 1 mm to 15 mm, preferably from 3 mm to 10 mm. Simultaneously with, or after, bonding the second blade component to the first blade component, the wind turbine shell may be closed, preferably by joining the pressure side shell half to the suction side shell half.

Preferably after the wind turbine shell is closed, an ultrasound image, preferably a cross-sectional image, is obtained of the adhesive joint and at least part of the bonded first and second blade components. In a preferred embodiment, the ultrasound image is obtained by an ultrasonic scan, preferably through the first blade component, and preferably through the adhesive joint and through the second blade component. Preferably, the ultrasound image is obtained during an ultrasound scan using an ultrasound probe, typically comprising an ultrasound transducer, over the outer blade surface at the region of the adhesive joint, such as at the region of the adhesive joint between a shell and a shear web. The ultrasound probe may comprise one or more elements for transmitting and receiving ultrasound waves.

One or more ultrasound images of the adhesive joint and the adjoining first and second blade components may be obtained during an ultrasonic scan comprising moving an ultrasonic probe along an outer surface of the wind turbine blade, for example along a scanning line. One or more cross-sectional ultrasound images are thus preferably obtained. The accordingly obtained cross-sectional image(s) advantageously include information on the integrity of the adhesive joint between the first and second blade components.

Thus, in a preferred embodiment, the ultrasound image is a cross-sectional image which is obtained by moving the ultrasound probe along the outer blade surface along a scanning path. Preferably, the acquisition of the cross-sectional image is carried out by performing a B scan. The B scan image is preferably a vertical cross-sectional image of the relevant region containing the adhesive joint, usually containing information on the probe position and the depth. Thus, the ultrasound scan will usually include obtaining data on the position of the ultrasound probe as well as depth data acquired by the probe, wherein a cross-sectional image can be created by associating said data.

Preferably, during the ultrasonic scan, echo amplitudes are obtained and stored digitally, usually together with the transducer position. The ultrasound image can preferably be examined on a connected screen, for example on a portable computer device. In some embodiments, the cross-sectional ultrasound image is displayed real-time on a display device such as a monitor. In some embodiments, a handheld monitor could be used, or a wirelessly connected computer which may display the image.

In a preferred embodiment, the ultrasound image is a two-dimensional ultrasound image. In a preferred embodiment, the ultrasound image is an ultrasonic B-scan image.

The ultrasound imaging marker is identified on the ultrasound image to verify the integrity of the adhesive joint between the first and second blade components. It is thus preferred that verifying the integrity of the adhesive joint comprises confirming the presence of the second blade component joined to said adhesive joint. In a preferred embodiment, the step of identifying the ultrasound imaging marker on the ultrasound image comprises visually observing a signature pattern of the ultrasound imaging marker on a cross-sectional ultrasonic image, such as a B-scan image. The step of identifying the ultrasound imaging marker, preferably by observing the signature pattern, may be performed by an operator, or by using a computer device, preferably using an image analysis program for performing cross-sectional image analysis. In some embodiments, the step of identifying the ultrasound imaging marker, preferably by observing the signature pattern, may comprise detecting a signal with an echo level that is greater than a predetermined threshold. Said predetermined threshold may be an absolute value, or it may be determined relative to a background echo level. The step of visually observing a signature pattern of the ultrasound imaging marker on the ultrasound image may comprises visually confirming the presence of said signature pattern on the ultrasound image.

In a preferred embodiment, the signature pattern of the ultrasound imaging marker on the ultrasonic image may comprise a characteristic shape, such as a characteristic two-dimensional shape on a cross-sectional ultrasonic image. In another preferred embodiment, the signature pattern of the ultrasound imaging marker on the ultrasonic image may comprise a characteristic signal intensity. In a particularly preferred embodiment, the signature pattern of the ultrasound imaging marker on the ultrasonic image comprises a combination of a characteristic shape, such as a characteristic two-dimensional shape on a cross-sectional ultrasonic image, and a characteristic intensity.

In some embodiments, an operator or an image analysis program run on a computer device may compare a reference characteristic shape and/or a reference characteristic signal intensity, which may be stored on the computer device, with a detected shape and/or signal intensity on the ultrasound image, to confirm the presence or absence of the ultrasound imaging marker on the ultrasound image. It is preferred that the signature pattern of the ultrasound imaging marker comprises an attenuated ultrasound echo, such as a scattered ultrasound echo, or an ultrasound echo with a lower intensity as the ultrasound wave produced by the ultrasound probe.

In some embodiments, identifying the signature pattern of the ultrasound imaging marker on the ultrasonic image involves comparing two images, including a first image which shows a reference image without the marker and a second image with the marker.

In a preferred embodiment, the step of identifying the ultrasound imaging marker on the ultrasound image further comprises visually observing the signature pattern at a predetermined location of the cross-sectional ultrasound image, such as within a predetermined depth interval.

The ultrasound image may be a B-mode ultrasound image, obtained by using a B-scan technique. The ultrasound probe may comprise an ultrasonic transceiver, wherein a reflected echo of the ultrasound wave is sensed. The ultrasound probe may be operated using a "pulse echo" method. Thus, preferably, ultrasonic waves generated by the transceiver are bounced off and reflected from the ultrasound imaging marker. Thus, in a preferred embodiment, the ultrasonic inspection is carried out with an ultrasonic transceiver that is operated in a pulse echo mode.

In another aspect, the present invention relates to a wind turbine blade comprising a first blade component and a second blade component bonded to each other along at least one adhesive joint, wherein the second blade component comprises an ultrasound imaging marker permanently attached to the second blade component. Such wind turbine blade is structurally distinct from known blades in that it comprises one or more ultrasound imaging markers, usually in the interior of the blade, as permanent parts. This has the advantage that the blade can be efficiently examined for adhesive joint integrity during its lifespan, using methods of the present invention.

In a preferred embodiment, the first blade component is a blade shell part, and wherein the second blade component is a shear web comprising at least one mounting flange for adhesively joining the shear web to a shear web mounting region on an inner surface of a blade shell part, wherein said mounting flange comprises a first surface facing the shear web mounting region and a second opposing surface, wherein the ultrasound imaging marker is attached on the second opposing surface of the mounting flange. The above-described features and embodiments of the various parts, such as the ultrasound imaging marker, likewise apply to the blade of this aspect of the invention.

In another aspect, the present invention relates to system for inspecting a wind turbine blade having a pair of shell parts surrounding a second blade component which is adhesively bonded to one or both of the shells, the system comprising:
an ultrasound imaging marker attached to the second blade component, and
an ultrasound machine for taking ultrasound images of an interior portion of the shells of the wind turbine blade including the ultrasound imaging marker.

The ultrasound imaging marker is preferably attached to the blade component in the vicinity of an adhesive joint between the blade component and the shell. The above-described features and embodiments of the various parts, such as the ultrasound imaging marker, likewise apply to the system of this aspect of the invention.

In another aspect, the present invention relates to a method of inspecting a glued assembly of a first wind turbine blade component and a second wind turbine blade component, the method comprising
obtaining an ultrasound image of the glued assembly comprising receiving an ultrasound image of the glued assembly, preferably a cross-sectional ultrasound image, such as B-scan ultrasound image, and
identifying an ultrasound imaging marker attached to the second wind turbine blade component on the ultrasound image to verify the integrity of the adhesive joint between the first and second blade components.

In a preferred embodiment, the first blade component is a blade shell part, such as a suction side shell half or a pressure side shell half, and the second blade component is a shear web, wherein preferably a mounting flange of the shear web is bonded to an inner surface of the shell part. The above-described features and embodiments of the various parts, such as the ultrasound imaging marker, likewise apply to the method of inspecting a glue assembly of this aspect of the invention.

An ultrasound machine for obtaining the ultrasound image may include a plurality of phased array probes capable of generating a cross-sectional image without mechanical scanning or it may include a single element probe with a mechanical scanning mechanism.

In another aspect, the present invention relates to a method of manufacturing a wind turbine blade comprising the steps of providing a first blade component and a second blade component, attaching at least one imaging marker to the second blade component, bonding the second blade component to the first blade component along at least one adhesive joint, obtaining an image of the adhesive joint and at least part of the bonded first and second blade components, and identifying the imaging marker on the image to verify the integrity of the adhesive joint between the first and second blade components.

The image is preferably obtained by a non-invasive imaging technique, such as radar. infrared thermography or X-ray imaging.

It should be appreciated that the term "adhesive" or "glue" is used herein to encompass any type of adhesive or bonding material, which is preferably applied in an initially flowable state. Any suitable type of epoxy, compound, or other material may be used in this regard.

It will be understood that any of the embodiments and features described above in relation to the methods of manufacturing a wind turbine blade likewise apply to the wind turbine blade, to the system for inspecting a wind turbine blade, and to the method of inspecting a glued assembly, and vice versa.

As used herein, the term "longitudinal" means an axis or direction running substantially parallel to the maximum linear dimension of the element in question, for example a wind turbine blade.

### Detailed description of the invention

The invention is explained in detail below with reference to embodiments shown in the drawings, in which
Fig. 1 shows a wind turbine,
Fig. 2 shows a schematic view of a wind turbine blade,
Fig. 3 shows a schematic view of a cross-section of a wind turbine blade,
Fig. 4 is a cross-sectional view of a glued assembly comprising an adhesive joint between a shell part and a shear web,
Fig. 5 is a cross-sectional view a glued assembly illustrating a defective adhesive joint between a shell part and a shear web,
Fig. 6 is an ultrasound image of a glued assembly with an adhesive joint illustrating a detected back wall echo at a certain depth,
Fig. 7 is a cross-sectional view of a glued assembly with an adhesive joint between a shell part and a shear web using an ultrasound imaging marker according to one embodiment of the present invention,
Fig. 8 is a cross-sectional view of a glued assembly with an adhesive joint between a shell part and a shear web using an ultrasound imaging marker according to another embodiment of the present invention, and
Fig. 9 is an ultrasound image of a glued assembly with an adhesive joint illustrating a signature pattern of created by an ultrasound imaging marker according to the present invention.

### Detailed description

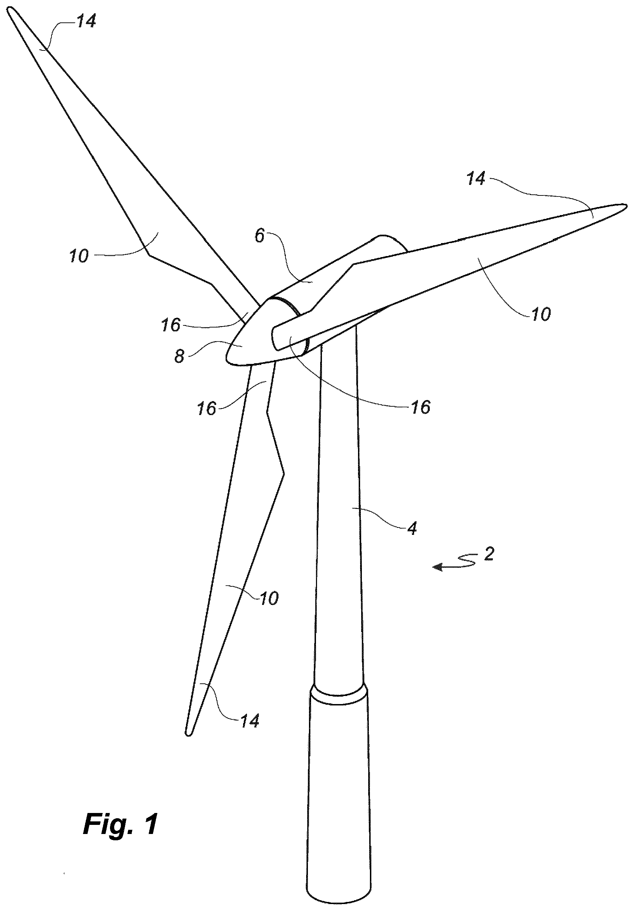

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

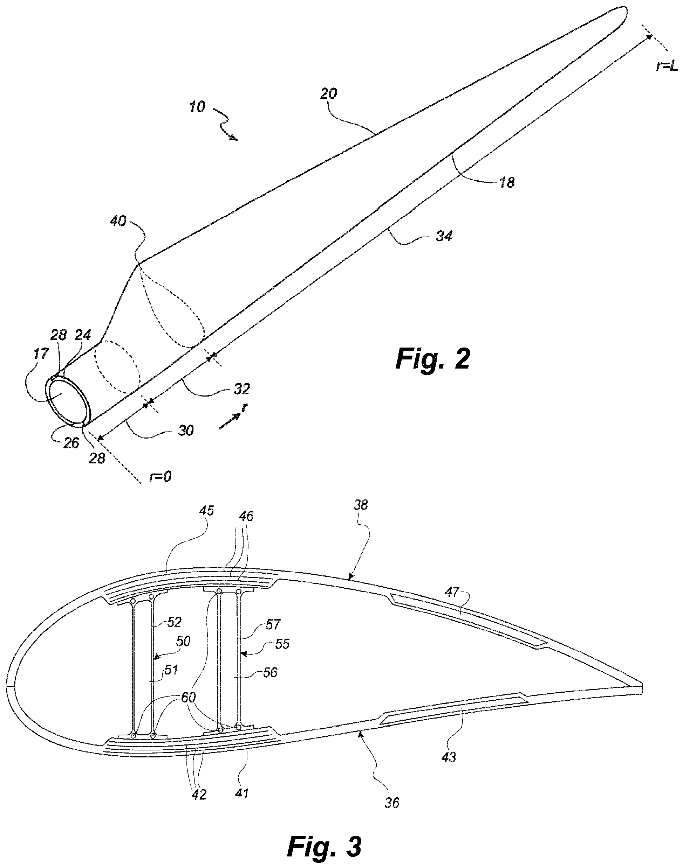

Fig. 2 shows a schematic view of an embodiment of a wind turbine blade 10 according to the invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34. It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

Fig. 3 shows a schematic view of a cross section a blade. As previously mentioned, the blade 10 comprises a pressure side shell part 36 and a suction side shell part 38. The pressure side shell part 36 comprises a spar cap 41, also called a main laminate, which constitutes a load bearing part of the pressure side shell part 36. The spar cap 41 comprises a plurality of fibre layers 42 mainly comprising unidirectional fibres aligned along the longitudinal direction of the blade in order to provide stiffness to the blade. The suction side shell part 38 also comprises a spar cap 45 comprising a plurality of fibre layers 46. The spar cap 45 has a leading edge side 61 which is closer to the leading edge than the opposing trailing edge side 63 of the spar cap 45. The pressure side shell part 36 may also comprise a sandwich core material 43 typically made of balsawood or foamed polymer and sandwiched between a number of fibre-reinforced skin layers. The sandwich core material 43 is used to provide stiffness to the shell in order to ensure that the shell substantially maintains its aerodynamic profile during rotation of the blade. Similarly, the suction side shell part 38 may also comprise a sandwich core material 47.

The spar cap 41 of the pressure side shell part 36 and the spar cap 45 of the suction side shell part 38 are connected via a first shear web 50 and a second shear web 55. The shear webs 50, 55 are in the shown embodiment shaped as substantially I-shaped webs. The first shear web 50 comprises a shear web body and two web foot flanges. The shear web body comprises a sandwich core material 51, such as balsawood or foamed polymer, covered by a number of skin layers 52 made of a number of fibre layers. The blade shells 36, 38 may comprise further fibre-reinforcement at the leading edge and the trailing edge. Typically, the shell parts 36, 38 are bonded to each other via glue flanges.

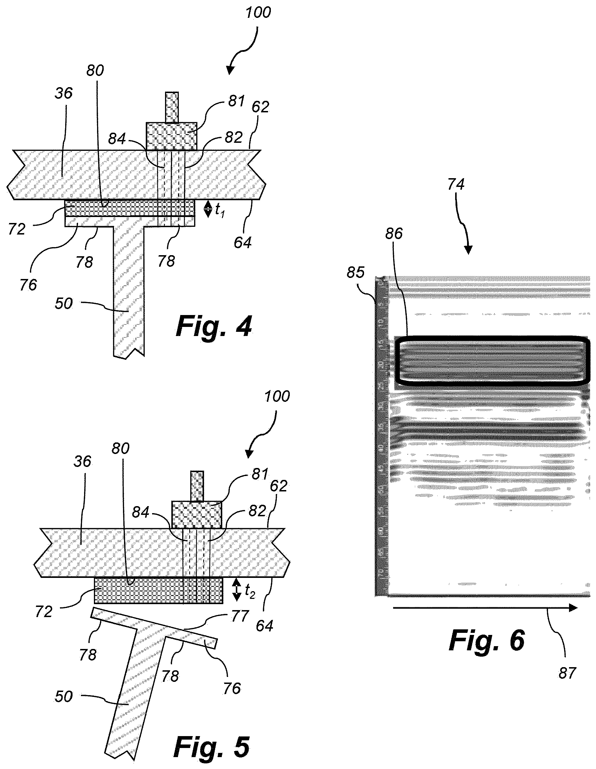

Fig. 4 is a cross-sectional view of a glued assembly 100 comprising an adhesive joint 72 between a shell part 36 and a shear web 50, both of the general type as discussed above with respect to Fig. 3. Fig. 4 illustrates a situation in which the adhesive joint is in order. An ultrasound probe 81, for example a hand-held ultrasound transceiver, is used to obtain an ultrasound image of the are of the adhesive joint, wherein incoming ultrasound waves 82 may be reflected, and wherein the reflected waves 84 are detected by the ultrasound probe 81. In the illustrated example, a back wall echo may be produced by surface 78 of the mounting flange 76 of the shear web 50.

A possible resulting ultrasound image 74 is illustrated in Fig. 6, wherein the region highlighted by the black frame 86 corresponds to a back wall echo signal. The x-axis 87 of Fig. 6 represents the position of the ultrasound probe along a scanning line over the along an outer blade surface, and the y-axis 85 of Fig. 6 represents the depth at each position. Ultrasound signals are illustrated which emanate from reflections of ultrasound waves emitted from the ultrasound probe, displayed in different shades depending on the strength. By using the depth scale 85, the depth of said back wall echo can be determined, which may allow conclusions as to the presence of the shear web and thus the integrity of the adhesive joint of the glued assembly 100.

However, precise control of the thickness of the adhesive joint 72 is challenging, and usually a certain tolerance applies, which may be on the order of a few millimeters, such as 1-25 mm. Similarly, the mounting flange 76 of the shear web 50 may have a thickness on the order of a few millimeters. This means that the ultrasound image 74 of Fig. 6 may just as well correspond to the situation illustrated in the cross-section of Fig. 5, which illustrates a defective adhesive joint between the shell part 36 and the shear web 50. Here, the shear web 50 is detached from the shell part 36 due to a defective bond. Also, the thickness t2 of the adhesive joint 72 is slightly higher than the thickness t1 of the adhesive joint 72 shown in Fig. 4. Thus, the back wall echo signal 86 illustrated in Fig. 6 may well correspond to the back wall created by the back wall of the adhesive joint 72, not by the mounting flange 76 of the shear web. Thus, the same ultrasound signal, measured at the same profile depth, may be ambiguous, and it may be impossible to verify the integrity of the adhesive joint using this technique.

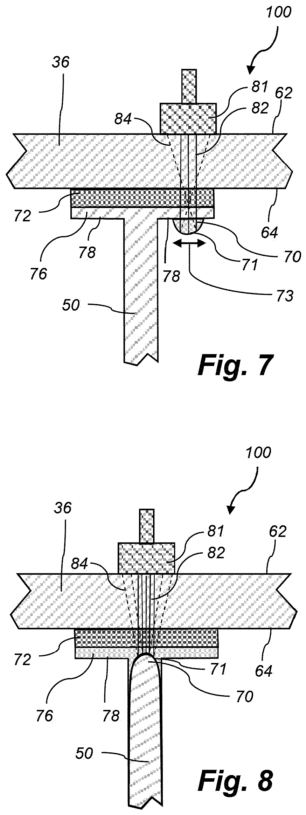

Thus, in the method of manufacturing a wind turbine blade according to the present invention, at least one ultrasound imaging marker 70 is attached to the second blade component 50, as illustrated in Figs. 7 and 8. As illustrated in the embodiment of Fig. 7, the shear web 50 comprises at least one mounting flange 76 for adhesively joining the shear web to a shear web mounting region 80 on an inner surface of the blade shell part, wherein said mounting flange comprises a first surface 77 and an opposing second surface 78, wherein the first surface 77 is bonded to the shear web mounting region 80, and wherein the ultrasound imaging marker 70 is attached on the second surface 78 of the mounting flange. The ultrasound imaging marker 70 is preferably adhesively bonded to surface 78 of the shear web 50.

The ultrasound imaging marker 70 in Fig. 7 may be made of a polymer foam material, such as PET foam, which is capable of absorbing and/or scattering ultrasonic waves. The ultrasound imaging marker 70 is shaped as a hemisphere or dome in the illustrated example, and is preferably comparatively light and small, having a preferred diameter 73 of 5-25 mm. Thus, the ultrasound imaging marker 70 of Fig. 7 comprises an arched surface 71

Then, the second blade component, i.e. the shear web 50 of the illustrated embodiment, is bonded to the first blade component, i.e., the shell part 36, along adhesive joint 72, using a suitable bonding paste or adhesive.

An ultrasound image 74 of the adhesive joint 72 and at least part of the bonded first and second blade components can be obtained using the ultrasound probe 81, which may be a handheld ultrasound transceiver.

In the embodiment illustrated in Fig. 8, the ultrasound imaging marker 70 is integrated into the second blade component 50. Here, the marker 70 has an arched end surface 71 pointing towards the shell part 36, and being capable of scattering ultrasound waves to produce a recognizable ultrasound signature 88.

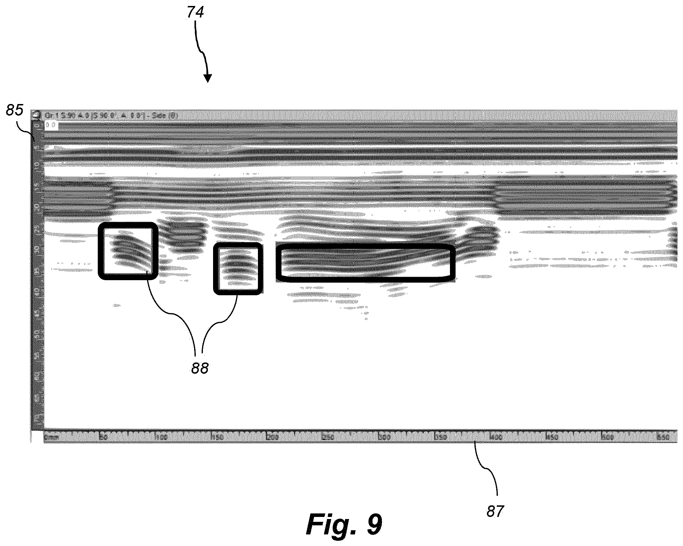

A representative ultrasound image 74 is shown in Fig. 9, which is a two-dimensional cross sectional image. The x-axis 87 of Fig. 9 represents the position of the ultrasound probe along a scanning line over the along an outer blade surface, and the y-axis 85 of Fig. 9 represents the depth at each position. Again, ultrasound signals are illustrated which emanate from reflections of ultrasound waves emitted from the ultrasound probe, displayed in different shades depending on the strength. As seen in Fig. 9, the ultrasound imaging marker 70 will alter the resulting ultrasound image as compared to the above-discussed known technique. The step of identifying the ultrasound imaging marker 70 on the ultrasound image 74 may preferably comprise visually observing a signature pattern 88 created by the ultrasound imaging marker 70 at a predetermined location of the two-dimensional ultrasound image. Thus, the resulting ultrasound image can be used to verify the integrity of the adhesive joint 72 between the first and second blade components. A wind turbine blade produced according to the method of the present invention will typically contain the ultrasound imaging marker 70 permanently attached to the second blade component 50.

The invention is not limited to the embodiments described herein, and may be modified or adapted without departing from the scope of the present invention.

### List of reference numerals

- 2: wind turbine
- 4: tower
- 6: nacelle
- 8: hub
- 10: blade
- 14: blade tip
- 16: blade root
- 18: leading edge
- 20: trailing edge
- 22: pitch axis
- 30: root region
- 32: transition region
- 34: airfoil region
- 36: pressure side shell part
- 38: suction side shell part
- 40: shoulder / position of maximum chord
- 41: spar cap
- 42: fibre layers
- 43: sandwich core material
- 45: spar cap
- 46: fibre layers
- 47: sandwich core material
- 50: first shear web
- 51: core member
- 52: skin layers
- 55: second shear web
- 56: sandwich core material of second shear web
- 57: skin layers of second shear web
- 60: filler ropes
- 62: outer shell surface
- 64: inner shell surface
- 70: ultrasound imaging marker
- 71: arched surface
- 72: adhesive joint
- 73: diameter
- 74: ultrasound image
- 76: mounting flange
- 77: first surface of mounting flange
- 78: second surface of mounting flange
- 80: shear web mounting region
- 81: ultrasound probe
- 82: ultrasonic waves
- 84: reflected ultrasonic waves
- 85: depth scale
- 86: backwall echo
- 87: x-axis / position of scanner

- *L*: blade length
- *r*: local radius, radial distance from blade root

## Claims

1. A method of manufacturing a wind turbine blade (10) comprising the steps of providing a first blade component (36) and a second blade component (50),
attaching at least one ultrasound imaging marker (70) to the second blade component (50),
bonding the second blade component (50) to the first blade component (36) along at least one adhesive joint (72),
obtaining an ultrasound image (74) of the adhesive joint (72) and at least part of the bonded first and second blade components, and
identifying the ultrasound imaging marker (70) on the ultrasound image to verify the integrity of the adhesive joint (72) between the first and second blade components, wherein the first blade component (36) is a blade shell part and wherein the second blade component (50) is a shear web, wherein the shear web (50) comprises at least one mounting flange (76) for adhesively joining the shear web to a shear web mounting region (80) on an inner surface of the blade shell part, wherein said mounting flange comprises a first surface (77) and an opposing second surface (78), wherein the first surface (77) is bonded to the shear web mounting region (80), and wherein the ultrasound imaging marker (70) is attached on the second surface (78) of the mounting flange.

2. A method according to claim 1, wherein the ultrasound image (74) is a two-dimensional ultrasound image, preferably a cross-sectional ultrasound image, such as an ultrasonic B-scan image.

3. A method according to claim 2, wherein the step of identifying the ultrasound imaging marker (70) on the ultrasound image (74) comprises visually observing a signature pattern created by the ultrasound imaging marker (70) at a predetermined location of the two-dimensional ultrasound image.

4. A method according to any of the preceding claims, wherein the ultrasound imaging marker (70) is capable of absorbing ultrasonic waves.

5. A method according to any of the preceding claims, wherein the ultrasound imaging marker (70) is capable of scattering ultrasonic waves.

6. A method according to any of the preceding claims, wherein the ultrasound imaging marker (70) comprises a polymer foam material, preferably polyethylene terephthalate (PET) foam.

7. A method according to any of the preceding claims, wherein the ultrasound imaging marker (70) has a diameter (73) or maximum dimension of 5-25 mm.

8. A method according to any of the preceding claims, wherein the ultrasound imaging marker (70) comprises at least one arched surface (71).

9. A method according to any of the preceding claims, wherein the step of attaching at least one ultrasound imaging marker (70) to the second blade component (50) comprises adhesively bonding the ultrasound imaging marker (70) to an outer surface of the second blade component (50).

10. A method according to any of claims 1-8, wherein the step of attaching at least one ultrasound imaging marker (70) to the second blade component (50) comprises integrating the ultrasound imaging marker (70) into the second blade component (50).

11. A wind turbine blade comprising a first blade component (36) and a second blade component (50) bonded to each other along at least one adhesive joint (72), wherein the first blade component (36) is a blade shell part and wherein the second blade component (50) is a shear web, wherein the shear web comprises at least one mounting flange (76) for adhesively joining the shear web to a shear web mounting region on an inner surface of the blade shell part, wherein said mounting flange comprises a first surface (77) and an opposing second surface (78), wherein the first surface is bonded to the shear web mounting region, **characterized in that** the second blade component (50) comprises an ultrasound imaging marker (70) permanently attached to the second blade component (50) and **in that** the ultrasound imaging marker (70) is attached on the second surface (78) of the mounting flange.

12. A method of inspecting a glued assembly (100) of a first wind turbine blade component and a second wind turbine blade component, the method comprising
obtaining an ultrasound image (74) of the glued assembly comprising receiving a cross-sectional ultrasound image, such as a B-scan ultrasound image, of the glued assembly, and
identifying an ultrasound imaging marker (70) attached to the second wind turbine blade component on the ultrasound image to verify the integrity of the adhesive joint (72) between the first and second blade components,
wherein the first blade component is a blade shell part and the second blade component is a shear web, wherein the shear web comprises at least one mounting flange for adhesively joining the shear web to a shear web mounting region on an inner surface of the blade shell part, wherein said mounting flange comprises a first surface (77) and an opposing second surface (78), wherein the first surface is bonded to the shear web mounting region, and wherein the ultrasound imaging marker (70) is attached on the second surface (78) of the mounting flange.

## Patentansprüche

1. Verfahren zum Herstellen einer Windturbinenschaufel (10), umfassend die Schritte
des Bereitstellens einer ersten Schaufelkomponente (36) und einer zweiten Schaufelkomponente (50),
des Anbringens mindestens einer Ultraschallbildgebungsmarkierung (70) an der zweiten Schaufelkomponente (50),
des Verbindens der zweiten Schaufelkomponente (50) mit der ersten Schaufelkomponente (36) entlang mindestens einer Klebeverbindung (72),
des Erhaltens eines Ultraschallbildes (74) der Klebeverbindung (72) und mindestens eines Teils der verbundenen ersten und zweiten Schaufelkomponente, und
des Identifizierens der Ultraschallbildgebungsmarkierung (70) auf dem Ultraschallbild, um die Unversehrtheit der Klebeverbindung (72) zwischen der ersten und der zweiten Schaufelkomponente zu überprüfen, wobei die erste Schaufelkomponente (36) ein Schaufelschalenteil ist und wobei die zweite Schaufelkomponente (50) ein Schersteg ist, wobei der Schersteg (50) mindestens einen Montageflansch (76) zum klebenden Verbinden des Scherstegs mit einem Scherstegmontagebereich (80) an einer Innenfläche des Schaufelschalenteils umfasst, wobei der Montageflansch eine erste Fläche (77) und eine gegenüberliegende, zweite Fläche (78) umfasst, wobei die erste Fläche (77) mit dem Scherstegmontagebereich (80) verbunden ist und wobei die Ultraschallbildgebungsmarkierung (70) an der zweiten Fläche (78) des Montageflansches angebracht ist.

2. Verfahren nach Anspruch 1, wobei das Ultraschallbild (74) ein zweidimensionales Ultraschallbild, vorzugsweise ein Querschnitts-Ultraschallbild, wie etwa ein Ultraschall-B-Scanbild ist.

3. Verfahren nach Anspruch 2, wobei der Schritt des Identifizierens der Ultraschallbildgebungsmarkierung (70) auf dem Ultraschallbild (74) das visuelle Beobachten eines Signaturmusters, das von der Ultraschallbildgebungsmarkierung (70) an einer vorbestimmten Stelle des zweidimensionalen Ultraschallbildes erzeugt wird, umfasst.

4. Verfahren nach einem der vorstehenden Ansprüche, wobei die Ultraschallbildgebungsmarkierung (70) in der Lage ist, Ultraschallwellen zu absorbieren.

5. Verfahren nach einem der vorstehenden Ansprüche, wobei die Ultraschallbildgebungsmarkierung (70) in der Lage ist, Ultraschallwellen zu streuen.

6. Verfahren nach einem der vorstehenden Ansprüche, wobei die Ultraschallbildgebungsmarkierung (70) ein Polymerschaummaterial, vorzugsweise Polyethylenterephthalat- (PET-) Schaum umfasst.

7. Verfahren nach einem der vorstehenden Ansprüche, wobei die Ultraschallbildgebungsmarkierung (70) einen Durchmesser (73) oder eine maximale Abmessung von 5-25 mm aufweist.

8. Verfahren nach einem der vorstehenden Ansprüche, wobei die Ultraschallbildgebungsmarkierung (70) mindestens eine gewölbte Fläche (71) umfasst.

9. Verfahren nach einem der vorstehenden Ansprüche, wobei der Schritt des Anbringens mindestens einer Ultraschallbildgebungsmarkierung (70) an der zweiten Schaufelkomponente (50) das Klebeverbinden der Ultraschallbildgebungsmarkierung (70) mit einer Außenfläche der zweiten Schaufelkomponente (50) umfasst.

10. Verfahren nach einem der Ansprüche 1-8, wobei der Schritt des Anbringens mindestens einer Ultraschallbildgebungsmarkierung (70) an der zweiten Schaufelkomponente (50) das Integrieren der Ultraschallbildgebungsmarkierung (70) in die zweite Schaufelkomponente (50) umfasst.

11. Windturbinenschaufel, umfassend eine erste Schaufelkomponente (36) und eine zweite Schaufelkomponente (50), die entlang mindestens einer Klebeverbindung (72) miteinander verbunden sind, wobei die erste Schaufelkomponente (36) ein Schaufelschalenteil ist und wobei die zweite Schaufelkomponente (50) ein Schersteg ist, wobei der Schersteg mindestens einen Montageflansch (76) zum klebenden Verbinden des Scherstegs mit einem Scherstegmontagebereich an einer Innenfläche des Schaufelschalenteils umfasst, wobei der Montageflansch eine erste Fläche (77) und eine gegenüberliegende, zweite Fläche (78) umfasst, wobei die erste Fläche mit dem Scherstegmontagebereich verbunden ist, **dadurch gekennzeichnet, dass** die zweite Schaufelkomponente (50) eine Ultraschallbildgebungsmarkierung (70) umfasst, die permanent an der zweiten Schaufelkomponente (50) angebracht ist, und dadurch, dass die Ultraschallbildgebungsmarkierung (70) an der zweiten Fläche (78) des Montageflansches angebracht ist.

12. Verfahren zur Inspektion einer geklebten Anordnung (100) einer ersten Windturbinenschaufelkomponente und einer zweiten Windturbinenschaufelkomponente, wobei das Verfahren umfasst
Erhalten eines Ultraschallbildes (74) der geklebten Anordnung, umfassend Empfangen eines Querschnitt-Ultraschallbildes, wie etwa ein B-Scan-Ultraschallbild, der geklebten Anordnung, und
Identifizieren einer Ultraschallbildgebungsmarkierung (70), die an der zweiten Windturbinenschaufelkomponente angebracht ist, auf dem Ultraschallbild, um die Unversehrtheit der Klebeverbindung (72) zwischen der ersten und der zweiten Schaufelkomponente zu überprüfen,
wobei die erste Schaufelkomponente ein Schaufelschalenteil ist und die zweite Schaufelkomponente ein Schersteg ist, wobei der Schersteg mindestens einen Montageflansch zum klebenden Verbinden des Scherstegs mit einem Scherstegmontagebereich an einer Innenfläche des Schaufelschalenteils umfasst, wobei der Montageflansch eine erste Fläche (77) und eine gegenüberliegende, zweite Fläche (78) umfasst, wobei die erste Fläche mit dem Scherstegmontagebereich verbunden ist und wobei die Ultraschallbildgebungsmarkierung (70) an der zweiten Fläche (78) des Montageflansches angebracht ist.

## Revendications

1. Procédé de fabrication d'une pale (10) d'éolienne comprenant les étapes suivantes :
la fourniture d'un premier composant (36) de pale et d'un deuxième composant (50) de pale,
la fixation d'au moins un marqueur d'imagerie ultrasonore (70) au deuxième composant (50) de pale,
le collage du deuxième composant (50) de pale au premier composant (36) de pale le long d'au moins un joint adhésif (72),
l'obtention d'une image ultrasonore (74) du joint adhésif (72) et d'au moins une partie des premier et deuxième composants de pale collés, et
l'identification du marqueur d'imagerie ultrasonore (70) sur l'image ultrasonore afin de vérifier l'intégrité du joint adhésif (72) entre les premier et deuxième composants de pale, dans lequel le premier composant (36) de pale est une partie de coque de pale et dans lequel le deuxième composant (50) de pale est une âme de cisaillement, dans lequel l'âme de cisaillement (50) comprend au moins une bride de montage (76) pour joindre de manière adhésive l'âme de cisaillement à une région de montage (80) d'âme de cisaillement sur une surface interne de la partie de coque de pale, dans lequel ladite bride de montage comprend une première surface (77) et une deuxième surface (78) opposée, dans lequel la première surface (77) est collée à la région de montage (80) d'âme de cisaillement, et dans lequel le marqueur d'imagerie ultrasonore (70) est fixé sur la deuxième surface (78) de la bride de montage.

2. Procédé selon la revendication 1, dans lequel l'image ultrasonore (74) est une image ultrasonore bidimensionnelle, préférablement une image ultrasonore en coupe transversale, telle qu'une image ultrasonore B-scan.

3. Procédé selon la revendication 2, dans lequel l'étape d'identification du marqueur d'imagerie ultrasonore (70) sur l'image ultrasonore (74) comprend l'observation visuelle d'un motif de signature créé par le marqueur d'imagerie ultrasonore (70) à un emplacement prédéterminé de l'image ultrasonore bidimensionnelle.

4. Procédé selon l'une quelconque des revendications précédentes, dans lequel le marqueur d'imagerie ultrasonore (70) est capable d'absorber des ondes ultrasonores.

5. Procédé selon l'une quelconque des revendications précédentes, dans lequel le marqueur d'imagerie ultrasonore (70) est capable de diffuser des ondes ultrasonores.

6. Procédé selon l'une quelconque des revendications précédentes, dans lequel le marqueur d'imagerie ultrasonore (70) comprend un matériau en mousse polymère, préférablement une mousse de polyéthylène téréphtalate (PET).

7. Procédé selon l'une quelconque des revendications précédentes, dans lequel le marqueur d'imagerie ultrasonore (70) présente un diamètre (73) ou une dimension maximale de 5 à 25 mm.

8. Procédé selon l'une quelconque des revendications précédentes, dans lequel le marqueur d'imagerie ultrasonore (70) comprend au moins une surface arquée (71).

9. Procédé selon l'une quelconque des revendications précédentes, dans lequel l'étape de fixation d'au moins un marqueur d'imagerie ultrasonore (70) au deuxième composant (50) de pale comprend le collage adhésif du marqueur d'imagerie ultrasonore (70) à une surface externe du deuxième composant (50) de pale.

10. Procédé selon l'une quelconque des revendications 1 à 8, dans lequel l'étape de fixation d'au moins un marqueur d'imagerie ultrasonore (70) au deuxième composant (50) de pale comprend l'intégration du marqueur d'imagerie ultrasonore (70) dans le deuxième composant (50) de pale.

11. Pale d'éolienne comprenant un premier composant (36) de pale et un deuxième composant (50) de pale collés l'un à l'autre le long d'au moins un joint adhésif (72), dans laquelle le premier composant (36) de pale est une partie de coque de pale et dans laquelle le deuxième composant (50) de pale est une âme de cisaillement, dans laquelle l'âme de cisaillement comprend au moins une bride de montage (76) pour joindre de manière adhésive l'âme de cisaillement à une région de montage d'âme de cisaillement sur une surface interne de la partie de coque de pale, dans laquelle ladite bride de montage comprend une première surface (77) et une deuxième surface (78) opposée, dans laquelle la première surface est collée à la région de montage d'âme de cisaillement, **caractérisée en ce que** le deuxième composant (50) de pale comprend un marqueur d'imagerie ultrasonore (70) fixé de manière permanente au deuxième composant (50) de pale et **en ce que** le marqueur d'imagerie ultrasonore (70) est fixé sur la deuxième surface (78) de la bride de montage.

12. Procédé d'inspection d'un ensemble collé (100) d'un premier composant de pale d'éolienne et d'un deuxième composant de pale d'éolienne, le procédé comprenant
l'obtention d'une image ultrasonore (74) de l'ensemble collé comprenant la réception d'une image ultrasonore en coupe transversale, telle qu'une image ultrasonore B-scan, de l'ensemble collé, et
l'identification d'un marqueur d'imagerie ultrasonore (70) fixé au deuxième composant de pale d'éolienne sur l'image ultrasonore afin de vérifier l'intégrité du joint adhésif (72) entre les premier et deuxième composants de pale,
dans lequel le premier composant de pale est une partie de coque de pale et le deuxième composant de pale est une âme de cisaillement, dans lequel l'âme de cisaillement comprend au moins une bride de montage pour joindre de manière adhésive l'âme de cisaillement à une région de montage d'âme de cisaillement sur une surface interne de la partie de coque de pale, dans lequel ladite bride de montage comprend une première surface (77) et une deuxième surface (78) opposée, dans lequel la première surface est collée à la région de montage d'âme de cisaillement, et dans lequel le marqueur d'imagerie ultrasonore (70) est fixé sur la deuxième surface (78) de la bride de montage.
